# EUROPEAN PATENT SPECIFICATION

(11) **EP 3 312 955 B1**
(45) Date of publication and mention of the grant of the patent: **09.06.2021**
(21) Application number: 15895331.5
(22) Date of filing: 16.07.2015
(51) Int. Cl.: H01T 19/04, H01T 4/02

(54) **PASSIVE COMPOUND STRONG-IONIZATION DISCHARGING PLASMA LIGHTNING REJECTION DEVICE**
PASSIVE VORRICHTUNG ZUR UNTERDRÜCKUNG VERBUNDENER STARK-IONISATIONSENTLADUNGSPLASMABLITZE
DISPOSITIF PASSIF DE PROTECTION CONTRE LA FOUDRE PAR PLASMA À DÉCHARGE PAR FORTE IONISATION COMPOSÉE

(30) Priority: 18.06.2015 CN 201510340702
(43) Date of publication of application: 25.04.2018
(73) Proprietor: Wang, Kunsheng, Kunming, Yunnan 650217 (CN)
(72) Inventor: Wang, Kunsheng, Kunming, Yunnan 650217 (CN)
(74) Representative: Hohendorf Kierdorf Patentanwälte PartGmbB
(86) International application number: PCT/CN2015/084226
(87) International publication number: WO 2016/201758

(56) References cited:
- WO-A1-2005/083863
- CN-A- 102 751 661
- CN-A- 103 956 655
- CN-U- 203 707 564
- CN-Y- 201 191 708
- US-A- 2 896 104
- US-A1- 2009 308 630

## Description

### Technical Field:

The invention relates to the technical field of lightning protection array in lightning protection technology, and particularly relates to a lightning rejection device with the air-plasma passively produced by the compound strong-ionization discharging for high-efficiently gathering and eliminating the cloud and ground charges under a thundercloud electric field, so that the direct-lightning strike can be effectively avoided.

### Background Technique:

At present, in the technical field of direct-lightning strike protection, the typical lightning protection devices are as follows: lightning rod, lightning eliminating array and compound active and passive air-plasma lightning rejection device. One of them, the lightning rod is commonly known as "lightning avoiding rod" in Chinese, but according to the latest national standard "Design Code for Protection of Structures against Lightning", "lightning rod" is officially corrected as "lightning attracting rod" in Chinese to be fit for the English name of Lightning Rod and abbreviated as LR. A derived device of LR is Early Streamer Emission and is abbreviated as ESE. Lightning Eliminating Array, which is known as Lightning Eliminator, is abbreviated as LEA. Compound Active and Passive Air-Plasma Lightning Rejection Device is abbreviated as CPLR.

LR has been continuously used for more than 250 years since it was invented by Benjamin Franklin and its principle of lightning protection is as follows. The thundercloud electric field is excited by utilizing the point effect on the tip of LR, and an upward leader is excited to attract the downward leader of lightning, and then the LR is broke down by lightning stroke and the lightning struck current releases through the grounding conductor to the ground to protect the objects from lightning stroke within the scope of protection radius which is about equal to the installation height of LR. However, the harms are caused by discharging the lightning current into the ground, such as back flashover, strong electromagnetic radiation, inducting overvoltage, personnel's step voltage and touch voltage, especially the serious harms to electronic equipment and system in the information Age. In addition, LR has some problems such as the lack of ions in the tip-excited upward leader and cannot attract the lightning with smaller current stably, causing its shielding failure for the protected object. For this reason, the various types of ESE represented by French products are derived. Usually, the auxiliary electrodes, discharge gap, energy storage inductor and capacitor are provided to emit their stored ions or high voltage pulse on the lightning rod, so as to make the tip of the lightning rod early and accurately excites the upward leader to attract the downward leader of lightning strike. In order to prevent the stored ions from spreading to the surrounding space, wrapping insulating material around the lightning rod is used and only allows the tip of the lightning rod to emit the stored ions intensively and to attract lightning earlier and more accurately.

LEA abandoned the harms of LR in discharging lightning current into the ground but absorbed the advantage of LR, that is, to attract lightning with its higher electric field strength produced by the semi-point effect on its multi-rods and make the protected objects to be placed in a relatively lower electric field strength without being broke down by lightning stroke. Therefore, it has not only higher electric field strength to gather thundercloud electric field and charge, but also high efficiency to consume the gathered thundercloud charge without being broke down by lightning so that the protected objects are in the low electric field strength without being struck down by lightning, which is the development direction of the direct lightning protection device. LEA is just constructed according to the development direction.

LEA was used by NASA in 1971 for the lightning protection of Apollo launch pad and its "non-lightning grounding" mechanism was used to solve the electronic system damages caused by the induced lightning stroke from Lightning Electromagnetic Pulse (LEMP) of traditional LR with "lightning grounding" mechanism. The lightning protection mechanism of LEA is called "charge transfer method" by NASA, which is also known as "charge neutralization method" in China. LEA is usually constructed as American-style with multi short-rods (the hemispherical radiating array with hundreds to thousands of short metal rods of about 300mm in length) and Chinese-style with less long-rods (the hemispherical radiation array with dozens of long metal rods of several meters in length and with several short auxiliary tips at the top of the rods) developed by Peng Yao, etc. in Yunnan Electric Power Test Center in 1979.

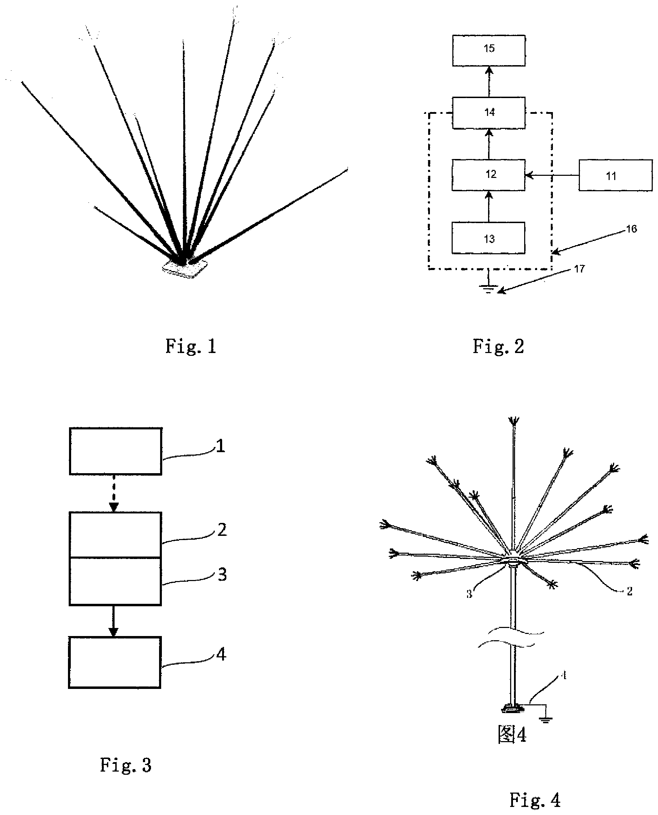

Fig. 1 shows a structure diagram of a less long-rods LEA with the existing technology. The LEA includes a base and the less long-rod array mounted on the base with an array arrangement. From the inducting of thundercloud electric field, air-plasma is produced by the glow discharge on the tips of the array rods. Under the attracting of the thundercloud electric field and its inducted hetero electric field on the ground, the hetero-ions in the air-plasma are separated and drifted towards the hetero-electric field and diffuse towards the region with lower ion density in the surrounding space. In fact, due to the thundercloud electric field charges gathered by the tips of LEA and the induced ground electric field charges gathered by the grounding conductor and the steel tower of LEA have been neutralized mostly by the hetero-ions of the air-plasma near the array tips and through the grounding conductor and the steel tower. So that the thundercloud electric field and its induced ground electric field are equalized and weakened to form a forced equalized electric field in the surrounding space and then the induced electric field strengths of the objects on the ground and the LEA itself cannot be excited by the thundercloud electric field to the breakdown level.

Thus it can be seen that the structure and the aim of LEA are fit for increasing the lightning breakdown voltage withstand level as high as possible. On the contrary, the structure and the aim of ESE are fit for decreasing the lightning breakdown voltage withstand level as low as possible.

However, while the LEA forms a forced equalized electric field in the surrounding space, it also weakens the electric field strength of its own tips. Accordingly, the ability of producing air-plasma is reduced, and the self-shielding effect of ionization discharging is presented. The improvement cannot be achieved even increasing the number of the rods in the array, because the factor of determining LEA's ability for eliminating lightning is the air-plasma dissipation current, but the self-shielding effect limits the further increasing of the air-plasma dissipation current. As a result, the existing LEA's ability of eliminating lightning is limited. With the best structure and operation environment (e.g. in the high elevation area where ionization is easier to achieve), the air-plasma dissipation current produced by LEA during the lightning activity is also less than 2mA. While in the dynamic weather and environmental conditions (such as low elevation area where ionization is not easier to achieve), the air-plasma dissipation current produced by LEA during the lightning activity will be even smaller and not enough to eliminate lightning stably, so that the probability of lightning breakdown for the LEA itself or the protected objects in its protection scope is higher and most people in the field of lightning protection have disputed or negative attitude to LEA. Too small air-plasma dissipation current is the fatal problem of practical application for LEA.

The Chinese patent 200410022185.2 applied on March 29, 2004 by the inventor of this invention disclosed a compound active and passive air-plasma lightning rejection method and device (CPLR). Fig.2 is the structural block diagram of the existing technology. In the device, the lightning fore-alarming signal unit (11) sends the starting signal to the active plasma generation unit (12) and the air flowing source unit (13). The air flowing source unit (13) operates to draw air from atmosphere or other applicable gases and transport it to the active plasma generator unit (12) for ionization. The high density plasma generated by ionizing air or other applicable gases is transported to the tubes of the lightning rods (14) and drained out from the tops of the tubes. Both the plasma produced by LEA's ionization discharging at the end of the array tips under thundercloud induction and the high density plasma generated by active strong-ionization discharging are used for compound dissipation at the end of the hollow tubes to compensate the shortage of the dissipation current from LEA. The advantage of CPLR is that it can be started earlier (when the distance from the thundercloud activity center to the protected object is about 5km with 15min drifting) to generate high density plasma actively at the favorable time that the thundercloud electric field is still weaker.

However, CPLR exists some problems, such as the technique of the active plasma generator is complicated; power supply is difficult on some occasions, especially the power cut of during the lightning activity the uninterruptible power supply (UPS) needs to be provided; its volume is relatively large; overall cost is higher; the maintenance is need for high-frequency and high voltage power electronic parts and electronic control system; and its dissipation current emitted by active plasma generator unit is relatively small; and then its application scope is limited. In view of the above problems of CPLR in the way of generating plasma actively and in order to use the passive way for efficiently gathering and eliminating thundercloud charges, through many laboratory simulation tests, studies and operation tests in heavy thunderstorm areas the inventor of this application developed the Device of Passive Compound Strong Ionization Discharging Plasma for Lightning Rejection (PCPLR) energized by thundercloud electric field completely to solve the existing technical problems.

Chinese utility model CN 201191708 discloses a lightning rod, which comprises a central collecting rod, an induction needle, a storage device and an exciter. The central collecting rod is connected to the reservoir through an insulator and the sensing needle is arranged on the side of the reservoir. At the end portion of the vertical portion of the reservoir the exciter is fixed. The exciter comprises an adjustable array of curved needles. The lightning rod improves the pre-discharge performance of conventional lightning rods, greatly expands the practical range and can be applied to various conventional, special or harsh natural environments.

### Contents of the Invention

The purpose of the invention is to provide a lightning rejection device with the air-plasma passively produced by the compound strong-ionization discharging and so that it can be energized by the thundercloud electric field to produce and dissipate air-plasma current for efficiently gathering and eliminating the thundercloud and ground charges and then avoiding the direct-lightning strike within the wide protection scope. The invention is to realize its purpose based on the following technical scheme:
A lightning rejection device is described in claim 1.

The described electrode A of the discharge electrodes of the strong-ionization discharging unit is an arc surface electrode, a plate electrode, a thin line electrode or a ring electrode, and electrode B is also of arc surface electrode, plate electrode, thin line electrode or ring electrode. The edges of the plate electrode are arc shape for eliminating the intensification effect of the edge electric field.

The described ring electrode A is an annular plate electrode, a circular arc surface electrode or an annular thin line electrode, while the electrode B is an annular plate electrode, a circular arc surface electrode or an annular thin line electrode; the annular electrode A and the ring electrode B are concentric rings. The edge of the annular plate electrode is an arc shape for eliminating the intensification effect of the edge electric field.

The described electrode A and electrode B are thin line electrodes and the thin line electrode is a single loop thin line or multi-loop thin lines, and the cross section radius R of the single loop thin line electrode is about 0.1 mm to 10 mm.

The described electrode A and electrode B are thin line electrodes, the thin line electrode is a linear convex bar on the plate plane of the plate electrode and the arc electrode, the linear convex is a fine circular line, a semicircle line, a tooth tip line, a section line of a thin plate or the edge angles of a thick plate, and the linear convex is a line with the section radius R of about 0.1 mm to1 0 mm, which can produce the thin line effect in ionizing discharging; The thin line electrode is perpendicular to the flat plate electrode by the axis or perpendicular to the normal of the arc plate electrode by the axis.

The described electrode A is a multi-thin-line electrode, electrode B is a flat plate electrode or a arc plate electrode and the axis of the thin line of the multi-thin-line electrode is perpendicular to the flat plate electrode or perpendicular to the normal of the arc plate electrode; The edges of the plate electrode or arc plate electrode are circular arc for eliminating the intensification effect of the edge electric field.

An additional insulating dielectric layer can be added between electrode A and electrode B of the described strong-ionization discharging unit and such dielectric layer can further increase the gap breakdown voltage.

The lightning-eliminating array contains an arc-cover pedestal and a dozen to hundreds of array rods; these array rods are mounted on the outer wall of the pedestal. The array rods can be metal solid rods or metal hollow tubes.

The pedestal is a hollow metal arc-cover, the described discharge electrodes of the strong-ionization discharging unit are installed inside of the arc-cover and the inner wall of the pedestal is one electrode of the discharge electrodes of the strong-ionization discharging unit; The pedestal is fixed on the other electrode of the discharge electrodes of the strong-ionization discharging unit through an insulating support. The discharge electrode is fixed on the seat structure of lightning rejection tower. The bottom of the pedestal is provided with an inlet, and the atmospheric upflow enters the pedestal along the inlet, flowing through the discharge electrodes and spreads into the space through the outlet of each array tubes.

According to the technical scheme of the invention, the beneficial effect is produced: the thundercloud charge gathering and eliminating unit formed by the existing technology of passively producing air-plasma with LEA is compounded with the passive strong-ionization discharging unit composed of a new air-plasma producing technology with "multi-thin-line effect" strong-ionization discharging, and connect with the grounding conductor. Energized by the thundercloud electric field, the compound strong-ionization discharging unit produces several 10 mC/s dissipation electric charge flow (i.e. several 10mA dissipation current), efficiently neutralizes the cloud and ground charges ±Q gathered by the lightning cloud electric charge gathering and eliminating unit and the grounding conductor, and effectively restrains the voltage V=Q/C of the equivalent capacitor C between the cloud and the ground from increasing without being charged by the lightning cloud electric field to the extent of being struck down to ground, i.e. the objects and the PCPLR itself within the wider scope of greater than 84° protection angle (i.e., the protection radius is 10 times of the PCPLR installation height) under the lightning cloud electric field are protected from thundercloud electric field breakdown.

The invention of PCPLR integrates the advantages of LR, LEA and CPLR technologies, but solves the main problems of them and then becomes a new generation of direct-lightning strike protection device.

As LEA is renewed and transformed by PCPLR, PCPLR has further increased the breakdown voltage withstand level and its breakdown voltage withstand level is more than 4.7 times that of LR, and then it has never been broke down by lightning.

The present invention is suitable for the direct-lightning strike protection of all kinds of fixed and movable objects.

In order to better understand and explain the conception, working principle and implementation effect of the invention, the following detailed illustration is made by means of the attached specific examples and their figures.

### Description of the attached figures:

Fig. 1 is the structure diagram of the lightning-elimination array of the existing technique LEA;
Fig. 2 is the structure block diagram of the existing technique CPLR;
Fig. 3 is the structure block diagram of the invention;
Fig. 4 is the schematic diagram of the installation structure of the invention;
Figure 5 is the first implementation example of the strong-ionization discharging unit of the invention, which shows that the schematic diagram of the concentric double ring arc cross section electrodes of the strong-ionization discharging unit;
Fig. 6A is the schematic diagram for the second implementation example of the strong-ionization discharging unit of the invention, which shows that the two electrodes of the strong-ionization discharging unit are the plate electrodes with the structure for eliminating the intensification effect of the edge electric field;
Fig. 6B is the schematic diagram of the dielectric layer fixed in the gap between the plate electrodes with the discharging unit in figure 6A;
Fig. 7A is the schematic diagram for the third implementation example of the strong-ionization discharging unit of the invention, which shows that the annular thin-line electrode of the strong-ionization discharging unit is connected with the thundercloud charge gathering and eliminating unit and the other circular plate electrode concentric with the annular thin-line electrode is connected with the grounding conductor;
Fig. 7B is the schematic diagram of the strong-ionization discharging unit which is similar as that in figure 7A, showing that the annular thin-line electrode of the discharging unit is electrically connected with the grounding conductor and that another electrode which is of annular electrode is connected with the thundercloud charge gathering and eliminating unit;
Fig. 8A is the fourth implementation example of the strong-ionization discharging unit of the invention, showing the schematic diagram that the vertical cylindrical multi thin-line electrode is connected with the thundercloud charge gathering and eliminating unit, and the other electrode is a circular plate electrode connected with the grounding conductor;
Fig. 8B is the schematic diagram of the strong-ionization discharging unit which is similar as that in figure 8A, it shows that the vertical cylindrical multi-thin-line electrode is connected with the grounding conductor, and the other electrode is a circular plate electrode connected with the thundercloud charge gathering and eliminating unit;

In the attached figures: 1. Thundercloud electric field; 2. Thundercloud charge gathering and eliminating unit; 3. Strong-ionization discharging unit; 4. Grounding conductor.

### Specific implementation methods

Fig. 3 is the structure block diagram of the invention. As shown in Fig. 3, a lightning rejection device with the air-plasma passively produced by the compound strong-ionization discharging comprises a thundercloud charge gathering and eliminating unit (2), a strong-ionization discharging unit (3) and a grounding conductor (4). The discharging electrodes of the strong-ionization discharging unit (3) includes electrode A and electrode B, of which electrode A is connected with the base of the thundercloud charge gathering and eliminating unit (2), electrode B is with the base structure for being fixed on the lightning rejection tower and connected to the grounding conductor(4), and a discharging gap is isolated and fixed between the two electrodes with insulating supporter.

The grounding conductor (4) is connected to the ground or the equivalent reference ground composed of the floating-grounding metal plate.

Under the energizing of thundercloud electric field (1): the external components of thundercloud charge gathering and eliminating unit (2) are induced by the thundercloud electric field to form a hetero electric field on the tips of the array rods and produce the ionized discharging plasma between the two hetero electric fields; the internal wall of the base for the thundercloud charge gathering and eliminating unit (2) and its connected discharging electrode A of the strong-ionization discharging unit (3) produce the hetero electric field against the external electric field of the external components, i.e., the same electric field polarity as that of the thundercloud electric field. At the same time, as induced by the thundercloud electric field, the grounding conductor (4) and the ground produce the hetero electric field, and then the electric field of the electrode B of the strong-ionization discharge unit (3) connected with the grounding conductor (4) is with hetero against the thundercloud electric field, and so that, the electric fields of the two hetero electrodes discharge in their gap, and the strong electric field and strong ionization discharging plasmas are produced between the electrodes owing to the optimizing for the structure and the clearance size of the electrodes. Because the strong-ionization discharging unit (3) is connected in series between the thundercloud charge gathering and eliminating unit (2) and the grounding conductor unit (4), the level to produce strong electric field strength and strong ionization discharging plasma dissipation current for the thundercloud charge gathering and eliminating unit (2) and for the grounding conductor (4) is raised directly. The plasmas generated by the compound strong ionization discharging in this device dissipate around the tips of the array rods and the strong ionization discharge electrodes. Under the attraction of the thundercloud electric field and its induced hetero electric field on the ground objects, the positive and negative ions of the plasma are separated and individually drift towards the hetero electric field and diffuse towards the region with low density ions, and neutralize the hetero thundercloud charges and the charges induced on the ground objects around PCPLR, i.e., energized by the thundercloud electric field, the compound strong-ionization discharging unit produces several 10 mA dissipation current, efficiently neutralizes the cloud and ground charges ±Q and effectively restrains the voltage V=Q/C of the equivalent capacitor C between the cloud and the ground from increasing without being charged by the lightning cloud electric field to the extent of being struck down to ground, i.e. the objects and the PCPLR itself within the wider scope of greater than 84° protection angle (i.e., the protection radius is 10 times of the PCPLR installation height) under the lightning cloud electric field are protected from thundercloud electric field breakdown.

Fig. 4 is the schematic diagram of the installation structure of the invention: in which the PCPLR is mounted on the top of the tower at the highest point rising from the ground to the protected area, and it can also be installed on the top of the tower of the tallest buildings or the protected transmission line tower within the protected scope; In the figure, the thundercloud charge gathering and eliminating unit (2) is connected with the strong-ionization discharging unit (3) and fixed at the top of the elevated tower through the strong-ionization discharging unit (3), and the grounding electrode of the strong-ionization discharging unit (3) is connected through a lead wire to the grounding conductor (4).

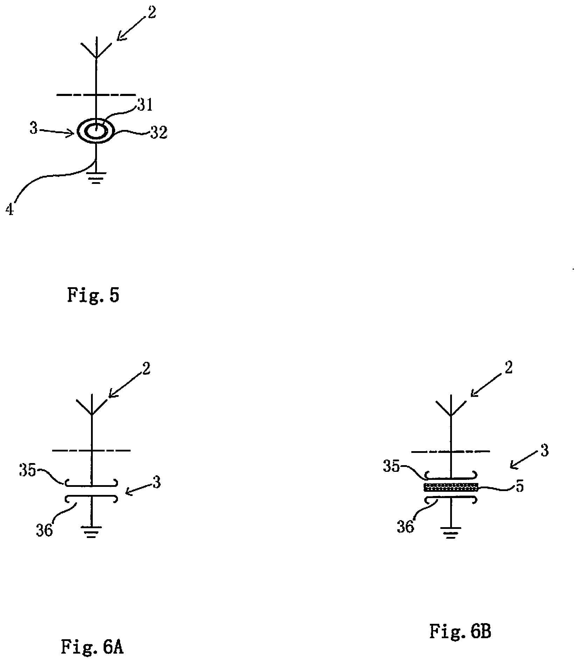

The strong-ionization discharging unit (3) of the invention can have various forms of structure. Figure 5 is the first implementation example of the strong-ionization discharging unit of the invention, it shows the schematic diagram of the concentric double ring arc cross section electrode of the strong-ionization discharge unit; As shown in Fig. 5, the concentric double ring arc section electrode includes one electrode A conected with the base of the thundercloud gathering and eliminating unit (2), and the outer circumferential surface of the electrode A is the outer ring surface (31); the inner circumferential surface of another electrode B connected with the grounding conductor (4) is the inner ring surface (32). The inner ring surface (32) is placed outside the outer ring surface (31), the outer ring surface (31) and the inner ring surface (32) are concentric, and the discharge gap is isolated and fixed with the insulating support between the outer ring surface (31) and the inner ring surface (32). In order to further improve the voltage breakdown level between the two electrodes, the insulating dielectric layer can be set between the outer ring surface (31) and the inner ring surface (32) according to the need.

Fig. 5 is the first implementation example. According to the actual need, the outer ring surface (31) electrode of the strong-ionization discharging unit (3) can be electrically connected with the grounding conductor (4), and the inner ring surface (32) electrode and the base of the thundercloud charge gathering and eliminating unit (2) can be connected.

Fig. 6A is the second implementation example of the strong-ionization discharging unit of the invention, which shows that the two electrodes of the discharge electrodes of the strong-ionization discharging unit are as shown in the schematic diagram with the plate electrodes to eliminate the intensification effect of the edge electric field. As shown in the figure, one plate electrode (35) is connected with the thundercloud charge gathering and eliminating unit (2) and another plate electrode (36) is connected with the grounding conductor (4). In order to avoid the discharge breakdown of the marginal electric field intensification effect, the circumferences of the plate electrode A and the discharge surfaces (35) and (36) are respectively constructed with circular arc curling. In the presence of thundercloud electric field, the inner side electric field of plate electrode (35) and thundercloud electric field are the same polar electric field, another electric field of plate electrode (36) and the induced ground electric field are the same polarity electric field, and the ionization discharging is generated between the plate electrode (35) and the plate electrode (36) due to the inverse polarity of their electric fields.

Fig. 6B is the schematic diagram of the plate electrode gap being inserted with the insulating dielectric layer for the discharging unit in the figure 6A; For further improving the voltage breakdown level between the two electrodes, according to the needs, the insulating dielectric layer (5) can be inserted into the gap between the plate electrode (35) and the plate electrode (36). The discharging gap between the discharging electrodes is isolated and fixed with insulating support, the strong-ionization discharging unit is fixed to the top of the tower through the grounding electrode and the following implementation examples are all the same and it is not necessary to be repeatedly described.

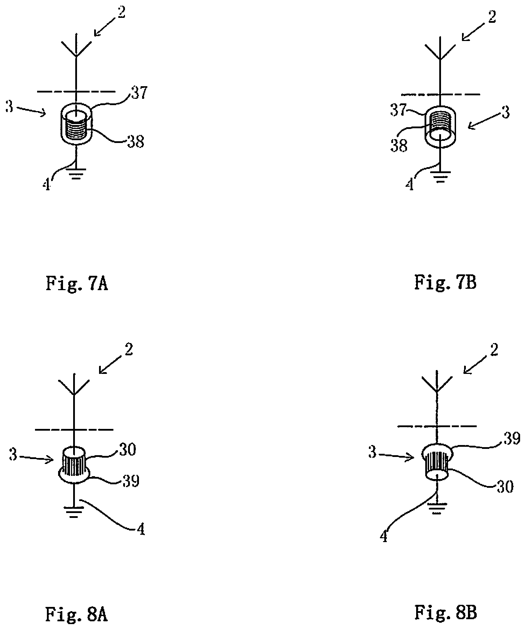

Fig. 7A is the third implementation example of the strong-ionization discharging unit of the invention, showing the schematic diagram that the annular thin line electrode of the strong-ionization discharging unit is connected with the thundercloud charge gathering and eliminating unit; As shown in the figure, the described electrode B of the strong-ionization discharging unit is the annular plate (37) and the annular plate (37) is connected with the grounding conductor (4); Another electrode A is the circular thin line electrode (38) which is concentric with the annular plate (37). The annular thin line electrode is connected with the thundercloud charge gathering and eliminating unit (2).

Fig. 7B is the strong-ionization discharging unit which is similar as that in figure 7A, showing the schematic diagram that the annular thin line electrode of the strong-ionization discharge unit is electrically connected with the grounding conductor; As shown in the figure, the described electrode A of the strong-ionization discharging unit is the annular plate (37) and the annular plate (37) is connected with the thundercloud charge gathering and eliminating unit (2); Another electrode B is the circular thin line electrode (38) which is concentric with the annular plate (37). The annular thin line electrode is connected with the grounding conductor (4).

The radius R of the thin line section circular arc of the thin line electrode (38) is about 0.1 mm to 10 mm.

The thin line of the thin line electrode (38) broadly includes: a convex thin circular line, a semicircle line and a tooth tip line set on the plate plane of a plate electrode and an arc electrode. The radius R of the cross section circular arc of the thin plate section line and the corner lines of the thick plate is about 0.1 mm to 10 mm lines, which can produce a thin line effect in ionization discharging.

In the implementation example shown in Figures 7A and 7B, in order to further increase the voltage breakdown level between the two electrodes, the insulating dielectric layer can be inserted between the annular electrodes (37) and (38) according to the need.

Fig. 8A is the fourth implementation example of the strong-ionization discharging unit of the invention, showing the schematic diagram that the cylindrical thin line electrode is vertical to the plate electrode and is connected with the thundercloud charge gathering and eliminating unit; As shown in the figure, the described electrode B of the strong-ionization discharging unit is the plate electrode (39), which is electrically connected with the grounding conductor (4); Another electrode A is the cylindrical thin line electrode (30) vertical to the plate electrode (39) and the thin line electrode is connected with the thundercloud charge gathering and eliminating unit (2). An appropriate ionization discharging gap between the plate electrode (39) and the cylindrical thin line electrode (30) vertical to it is maintained.

The implementation example in Fig. 8B is similar to the strong-ionization discharging unit in Figure 8A, showing the schematic diagram that the vertical cylindrical thin line electrode is set vertical to the plate electrode and is connected with the grounding conductor (4); As shown in the figure, the described electrode A of the strong-ionization discharging unit is the plate electrode (39), which is electrically connected with the thundercloud charge gathering and eliminating unit (2); Another electrode B is the cylindrical thin line electrode (30) vertical to the plate electrode (39) and the thin line electrode is connected with the grounding conductor (4). An appropriate ionization discharging gap between the plate electrode (39) and the cylindrical thin line electrode (30) vertical to it is maintained.

In the implementation examples shown in Fig. 8A and Fig. 8B, in order to further increase the voltage breakdown level between the two electrodes, according to the needs, the insulating dielectric layer can be inserted in the gap between the plate electrode (39) and the cylindrical thin line electrode (30) vertical to it.

The strong-ionization discharging unit of the invention can also be a spherical electrode; One spherical electrode is electrically connected with the thundercloud charge gathering and eliminating unit (2), and another spherical electrode is electrically connected with the grounding conductor (4).

In order to improve the effect of ionization discharge, the thundercloud charge gathering and eliminating unit is a lightning-eliminating array. The lightning eliminating array can either be the LEA of American-style with multi short-rods or the LEA of Chinese-style with less long-rods.

The lightning-eliminating array contains an arc-shaped base and a dozen to hundreds of array rods; these array rods are mounted on the outer wall of the base. The array rod can be a metal solid rod or a metal hollow tube with tip.

Fig. 4 is the schematic diagram of installation structure of the thundercloud charge gathering and eliminating unit and the strong-ionization discharging unit of the invention. As shown in the figure, the lightning eliminating array contains one base and several array rods; The array rods are mounted on the outer wall of the base and the array rods are hollow metal tubes with tips; A discharging space is formed within the base, and the described electrode A of the strong-ionization discharging unit is compounded into one with the lightning eliminating array rods and base and is installed in the discharging space with another electrode B of the ground conductor; The base is fixed on the electrode seat of the electrode B through the insulating supporter and then fixed on the lightning rejection tower through the electrode seat. The bottom of the base is provided with an inlet, and the updraft enters the base along the inlet, flowing through the discharge electrodes and being spreaded into the space through the outlet of each array rods and tubes. The air passages are interconnected between the inlet, the strong- ionization discharging space and the hollow tubes of each array rods, the airflow channel is suitable for accelerating the inhalation of more updraft to ionize and outputting the ionized gas to the metal tips end of the array rods for re-ionizing and dissipating to produce more dissipation current.

The passive compound strong-ionization discharging air-plasma lightning rejection device of the invention neutralizes the thundercloud charges through the strong-ionization discharging unit (3) and in the way of strong-ionization discharging; in the meanwhile, the strong-ionization discharging unit (3) produces air-plasma by ionizing the air around it during the discharging process. It doesn't need artificial power supply in the process of air ionization but uses the energy provided by the thundercloud electric field to ionize the air from the atmosphere and efficiently produce high density plasma. The indexes of ion density, ionizing degree and ion instantaneous producing rate are greatly superior to those achieved by active plasma generator. For instance, the key indicator -dissipation current is about 600 times that of the active plasma generator and then ensures its reliable lightning rejecting passively. In the test operation of the prototype PLR in heavy lightning strike areas, the lightning stroke risk is monitored with lightning fore-alarm and the lightning rejection function of PLR is monitored with lightning stroke counter. In the wide protection range of the protection angle greater than 84°, the records of successful rejecting lightning without failure have reached for thousands of times.

A variety of simulation tests have been carried out for the invention. In one of the tests, when the thunder-cloud electrode plate is supplied with strong electric field strength and the conventional LR maintains strong brush-discharging as its electric field strength is increased by about 1000 times due to the point effect on its tip, move a LPR into any position under the thundercloud electrode plate, then the LR immediately stops discharging and there is also no discharging between the PLR and the thundercloud electrode plate either. It shows that PLR is able to protect the objects like LR with the highest induced electric field strength and PLR itself from lightning stroke under the whole thundercloud electrode plate. With the strong ionization discharging, PLR can reach the charge dissipating rate of 30 mC/s (i.e. 30 mA dissipating current), i.e., in 5.6 minutes it can neutralize 10C charges at the bottom of the thundercloud and then effectively restrains the intensification of thundercloud electric field and the formation and development of the lightning leader and realizes the lightning rejection with non-lightning- breakdown to the ground by the way of slow leaking and neutralizing the charges at the bottom of the thundercloud.

## Claims

1. A passive compound strong ionization discharging plasma lightning rejection device comprises
a thundercloud charge gathering and eliminating unit (2) for passively producing air-plasma,
a passive strong-ionization discharging unit (3) and
a grounding conductor (4),
wherein the discharging electrode of the strong-ionization unit (3) has two electrodes (30, 31, 32, 35, 36, 37, 38, 39), electrode A (31, 35, 38, 37, 30, 39) being connected with the thundercloud charge gathering and eliminating unit (2), electrode B (32, 36, 37, 38, 39, 30) being connected to the grounding conductor (4), and a discharging gap being kept and fixed between the two electrodes (30, 31, 32, 35, 36, 37, 38, 39) by an insulating supporter; **characterized in that**
the strong-ionization discharging unit (3) is connected in series between the thundercloud charge gathering and eliminating unit (2) and the grounding conductor unit (4), and that
the thundercloud charge gathering and eliminating unit (2) is a lightning eliminating array, wherein the lightning-eliminating array contains an arc-shaped base and a dozen to hundreds of array rods with tips and these array rods are mounted on the outer wall of the base.

2. A lightning rejection device according to claim 1,
wherein the electrode A (31, 35, 38, 37, 30, 39) of the discharging electrode of the strong-ionization discharging unit (3) is the arc surface electrode, plate electrode, thin line electrode or ring electrode, while electrode B (32, 36, 37, 38, 39, 30) is a ring surface electrode, plate electrode, thin line electrode or ring electrode; the edge of the plate electrode is with a circular arc form that eliminates the intensification effect of the edge electric field.

3. A lightning rejection device according to claim 2,
wherein the described ring electrode A (31, 35, 38, 37, 30, 39) is the annular plate electrode, circular arc surface electrode or annular thin line electrode, while electrode B (32, 36, 37, 38, 39, 30) is the annular plate electrode, circular arc surface electrode or annular thin line electrode; annular electrode A (31, 35, 38, 37, 30, 39) and ring electrode B (32, 36, 37, 38, 39, 30) are concentric rings; the edge of the annular plate electrode is with a circular arc form that eliminates the intensification effect of the edge electric field.

4. A lightning rejection device according to claim 2,
wherein the described annular electrode A (31, 35, 38, 37, 30, 39) and ring electrode B (32, 36, 37, 38, 39, 30) are thin line electrodes; the thin line electrode is a circular single loop or multi-loop thin line, and the cross section arc radius R of single coil electrode is about 0.1 mm to 10mm.

5. A lightning rejection device according to claim 2,
wherein the described electrode A (31, 35, 38, 37, 30, 39) and electrode B (32, 36, 37, 38, 39, 30) are thin line electrode, the thin line electrode is a linear convex bar on the plate plane of the plate electrode and the arc electrode, the linear convex is a fine circular line, a semicircle line, a tooth tip line, a section line of a thin plate or the edge angle of a thick plate, and the section are radius R of the linear convex is a line of 0.1mm to 10mm adieus, which can produce thin line effect in ionizing discharging; the thin line electrode is perpendicular to the plate electrode by the axis and perpendicular to the plate electrode by the axis with the tip electrode equivalently.

6. A lightning rejection device according to claim 2,
wherein the described electrode A (31, 35, 38, 37, 30, 39) is multi-thin line electrode, electrode B (32, 36, 37, 38, 39, 30) is plate electrode or curved plate electrode and the axis of the thin line of the multi-thin line electrode is perpendicular to the plate electrode or perpendicular to the normal of the curved plate electrode; the edge of the plate electrode or arc plate electrode is with a circular arc form that eliminates the intensification effect of the edge electric field.

7. A lightning rejection device according to claims 1, 2, 3, 4, 5 or 6,
wherein an additional insulating dielectric layer can be added between electrode A (31, 35, 38, 37, 30, 39) and electrode B (32, 36, 37, 38, 39, 30) of the strong-ionization discharging unit (3) and such dielectric layer further enhances the gap break-down voltage.

8. A lightning rejection device according to claim 7,
wherein the lightning-eliminating array contains an arc cover-shaped base.

9. A lightning rejection device according to claims 1, 2, 3,4, 5, 6 or 8,
wherein the array rods are a metal solid rod or a metal hollow tube with tips.

10. A lightning rejection device according to claim 8,
wherein the base is a hollow arc metal cover, the described discharge electrode of the strong-ionization discharging unit (3) is installed in the hood and the inner wall of the pedestal is one pole of the discharging electrode of the strong ionization discharging unit (3); the base is fixed on the other electrode seat of the discharge electrodes of the strong ionization discharging unit (3) through an insulating supporter; the discharging electrode is fixed on the lightning rejection tower in a seat structure; the bottom of the base is provided with an inlet, and the atmospheric updraft enters the base along the inlet, flowing through the discharge electrodes and being spreaded into the space through the outlet of each array tube rods.

## Patentansprüche

1. Unterdrückungsvorrichtung mit passiven Komponenten für Stark-Ionissationsentladungsplasmablitze, umfassend
eine Gewitterwolkensammel- und Beseitigungseinheit (2) zur passiven Erzeugung von Luftplasma,
eine passive Stark-Ionisations-Entladungseinheit (3) und
einen Erdungsleiter (4),
wobei die Entladungselektrode der Stark-Ionisations-Entladungseinheit (3) zwei Elektroden (30, 31, 32, 35, 36, 37, 38, 39) aufweist, eine Elektrode A (31, 35, 38, 37, 30, 39) verbunden mit der Gewitterwolkensammel- und Beseitigungseinheit (2), eine Elektrode B (32, 36, 37, 38, 39, 30) verbunden mit dem Erdungsleiter (4) und einen Entladungsspalt, der zwischen den beiden Elektroden (30, 31, 32, 35, 36, 37, 38, 39) durch einen isolierenden Träger gehalten und fixiert wird,
**dadurch gekennzeichnet, dass**
die Stark-Ionisations-Entladungseinheit (3) seriell zwischen der Gewitterwolkensammel- und Beseitigungseinheit (2) und dem Erdungsleiter (4) verbunden ist und dadurch, dass
die Gewitterwolkensammel- und Beseitigungseinheit (2) ein Blitzentfernungsarray ist, wobei das Blitzentfernungsarray eine bogenförmige Basis und ein Dutzend bis hunderte von Arraystäben mit Spitzen aufweist und die Arraystäbe an der Außenwand der Basis angeordnet sind.

2. Blitzunterdrückungsvorrichtung nach Anspruch 1,
wobei die Elektrode A (31, 35, 38, 37, 30, 39) der Entladungselektrode der Stark-Ionisations-Entladungseinheit (3) eine bogenförmige Oberflächenelektrode, Plattenelektrode, Dünnlinienelektrode oder Ringelektrode ist, während die Elektrode B (32, 36, 37, 38, 39, 30) eine ringförmige Oberflächenelektrode, Plattenelektrode, Dünnlinienelektrode oder Ringelektrode ist, wobei die Kante der Plattenelektrode eine Kreisbogenform aufweist, die den Verstärkungseffekt des elektrischen Kantenfeldes beseitigt.

3. Blitzunterdrückungsvorrichtung nach Anspruch 2,
wobei die beschriebene Ringelektrode A (31, 35, 38, 37, 30, 39) die Kreisbogen-Plattenelektrode, bogenförmige Oberflächenelektrode oder Kreisbogen-Dünnlinienelektrode ist, während die Elektrode B (32, 36, 37, 38, 39, 30) die Kreisbogen-Plattenelektrode, bogenförmige Oberflächenelektrode oder Kreisbogen-Dünnlinienelektrode ist, wobei die Kreisbogen-Elektrode A (31, 35, 38, 37, 30, 39) und Ringelektrode B (32, 36, 37, 38, 39, 30) konzentrische Kreise sind, wobei die Kante der Kreisbogen-Plattenelektrode eine Kreisbogenform aufweist, die den Verstärkungseffekt des elektrischen Kantenfeldes beseitigt.

4. Blitzunterdrückungsvorrichtung nach Anspruch 2,
wobei die beschriebene Kreisbogenelektrode A (31, 35, 38, 37, 30, 39) und die Ringelektrode B (32, 36, 37, 38, 39, 30) Dünnlinienelektroden sind, wobei die Dünnlinienelektrode eine kreisförmige Einzelschleifen- oder Mehrschleifen-Dünnlinienelektrode ist und der Querschnittsbogenradius R der Einzelspulenelektrode ungefähr 0,1 mm bis 10 mm ist.

5. Blitzunterdrückungsvorrichtung nach Anspruch 2,
wobei die beschriebene Elektrode A (31, 35, 38, 37, 30, 39) und Elektrode B (32, 36, 37, 38, 39, 30) Dünnlinienelektroden sind, wobei die Dünnlinienelektrode ein linearer konvexer Balken auf der Plattenebene der Plattenelektrode und der Bogenelektrode ist, wobei die lineare konvexe eine feine kreisförmige Linie, eine Halbkreislinie, Zahnspitzenlinie, eine Teillinie der Dünnelektrode oder der Kantenwinkel einer dicken Platte ist und der Schnittbogenradius R der linearen konvexen Linie ist eine Linie von 0,1 mm bis 10 mm Radius, welcher den Dünnlinieneffekt beim ionisierenden Entladen erzeugen kann; wobei die Dünnlinienelektrode senkrecht zur Plattenelektrode um die Achse und äquivalent mit der Spitzenelektrode senkrecht zur Plattenelektrode um die Achse.

6. Blitzunterdrückungsvorrichtung nach Anspruch 2,
wobei die beschriebene Elektrode A (31, 35, 38, 37, 30, 39) eine Multi-Dünnlinienelektrode ist, die Elektrode B (32, 36, 37, 38, 39, 30) eine Plattenelektrode oder gekrümmte Plattenelektrode ist und die Achse der Dünnlinie der Multi-Dünnlinienelektrode senkrecht zur Plattenelektrode oder senkrecht zur Normalen der gekrümmten Plattenelektrode ist; wobei die Kante der Plattenelektrode oder der gekrümmten Plattenelektrode eine Kreisbogenform aufweist, die den Verstärkungseffekt des elektrischen Kantenfeldes beseitigt.

7. Blitzunterdrückungsvorrichtung nach Anspruch 1, 2, 3, 4, 5 oder 6,
wobei eine zusätzliche isolierende dielektrische Schicht zwischen Elektrode A (31, 35, 38, 37, 30, 39) und Elektrode B (32, 36, 37, 38, 39, 30) der Starklonisations-Entladungseinheit (3) hinzugefügt werden kann und wodurch die dielektrische Schicht die Durchschlagspannung des Spalts erhöht.

8. Blitzunterdrückungsvorrichtung nach Anspruch 7,
wobei das Blitzentfernungsarray eine bogenförmige Basis aufweist.

9. Blitzunterdrückungsvorrichtung nach Anspruch 1, 2, 3, 4, 5, 6 oder 8,
wobei die Arraystäbe Metallvollstäbe oder Metallhohlstäbe mit Spitzen sind.

10. Blitzunterdrückungsvorrichtung nach Anspruch 8,
wobei die Basis eine hohle bogenförmige Metallabdeckung ist, wobei die beschriebene Entladungselektrode der Stark-Ionisations-Entladungseinheit (3) in der Haube installiert ist und die Innenwand des Sockels ein Pol der Entladungselektrode der Stark-Ionisations-Entladungseinheit (3) ist, wobei die Basis auf dem anderen Elektrodensitz der Entladungselektroden der Stark-Ionisations-Entladungseinheit (3) durch einen isolierenden Träger befestigt ist, wobei die Entladungselektrode in einer Sitzstruktur am Blitzunterdrückungsturm befestigt ist; wobei der Boden der Basis mit einem Einlass versehen ist und der atmosphärische Aufwind durch den Einlass in die Basis eintritt, durch die Entladungselektroden fließt und durch den Auslass jedes Array-Rohrstabs in den Raum verteilt wird.

## Revendications

1. Dispositif passif de protection contre la foudre par plasma à décharge par forte ionisation composée comprenant :
une unité de collecte et d'élimination de charges de nuage d'orage (2) permettant de produire de manière passive du plasma d'air,
une unité passive de décharge par forte ionisation (3) et
un conducteur de mise à la terre (4),
dans lequel l'électrode de décharge de l'unité par forte ionisation (3) possède deux électrodes (30, 31, 32, 35, 36, 37, 38, 39), l'électrode A (31, 35, 38, 37, 30, 39) étant connectée à l'unité de collecte et d'élimination de charges de nuage d'orage (2), l'électrode B (32, 36, 37, 38, 39, 30) étant connectée au conducteur de mise à la terre (4), et
un espace de décharge qui est maintenu et fixé entre les deux électrodes (30, 31, 32, 35, 36, 37, 38, 39) par un support isolant ;
**caractérisé en ce que**
l'unité de décharge par forte ionisation (3) est connectée en série entre l'unité de collecte et d'élimination de charges de nuage d'orage (2) et l'unité de conducteur de mise à la terre (4), et **en ce que**
l'unité de collecte et d'élimination de charges de nuage d'orage (2) est un ensemble parafoudre, dans lequel l'ensemble parafoudre contient une base en forme d'arc et une douzaine à des centaines de tiges d'ensemble dotées de pointes et ces tiges d'ensemble sont montées sur la paroi externe de la base.

2. Dispositif de protection contre la foudre selon la revendication 1,
dans lequel l'électrode A (31, 35, 38, 37, 30, 39) de l'électrode de décharge de l'unité de décharge par forte ionisation (3) est l'électrode de surface arquée, l'électrode en plaque, l'électrode en ligne mince ou l'électrode en anneau, tandis que l'électrode B (32, 36, 37, 38, 39, 30) est une électrode de surface en anneau, une électrode en plaque, une électrode en ligne mince ou une électrode en anneau ; la périphérie de l'électrode en plaque présente une forme d'arc circulaire qui élimine l'effet d'intensification du champ électrique périphérique.

3. Dispositif de protection contre la foudre selon la revendication 2,
dans lequel l'électrode A en anneau décrite (31, 35, 38, 37, 30, 39) est l'électrode en plaque annulaire, l'électrode de surface en arc circulaire ou l'électrode en ligne mince annulaire, tandis que l'électrode B (32, 36, 37, 38, 39, 30) est l'électrode en plaque annulaire, l'électrode de surface en arc circulaire ou l'électrode en ligne mince annulaire ; l'électrode A annulaire (31, 35, 38, 37, 30, 39) et l'électrode B en anneau (32, 36, 37, 38, 39, 30) sont des anneaux concentriques ; la périphérie de l'électrode en plaque annulaire présente une forme d'arc circulaire qui élimine l'effet d'intensification du champ électrique périphérique.

4. Dispositif de protection contre la foudre selon la revendication 2,
dans lequel l'électrode A annulaire décrite (31, 35, 38, 37, 30, 39) et l'électrode B en anneau (32, 36, 37, 38, 39, 30) sont des électrodes en ligne mince ; l'électrode en ligne mince est une ligne mince circulaire à boucle unique ou à boucles multiples, et le rayon d'arc de section transversale R d'une électrode à bobine unique est d'environ 0,1 mm à 10 mm.

5. Dispositif de protection contre la foudre selon la revendication 2,
dans lequel l'électrode A décrite (31, 35, 38, 37, 30, 39) et l'électrode B (32, 36, 37, 38, 39, 30) sont une électrode en ligne mince, l'électrode en ligne mince est une barre convexe linéaire sur le pian de plaque de l'électrode en plaque et l'électrode en arc, le convexe linéaire est une ligne circulaire fine, une ligne semi-circulaire, une ligne de pointe de dents, une ligne de section d'une plaque mince ou l'angle périphérique d'une plaque épaisse, et les sections sont un rayon R du convexe linéaire qui est une ligne de 0,1 mm à 10 mm radius, qui peut produire l'effet de ligne dans une décharge par ionisation ; l'électrode en ligne mince est perpendiculaire à l'électrode en plaque par l'axe et perpendiculaire à l'électrode en plaque par l'axe ayant l'électrode de pointe de manière équivalente.

6. Dispositif de protection contre la foudre selon la revendication 2,
dans lequel l'électrode A décrite (31, 35, 38, 37, 30, 39) est une électrode en ligne mince multiple, l'électrode B (32, 36, 37, 38, 39, 30) est une électrode en plaque ou une électrode en plaque courbe et l'axe de la ligne mince de l'électrode en ligne mince multiple est perpendiculaire à l'électrode en plaque ou perpendiculaire à la normale de l'électrode en plaque courbe ; la périphérie de l'électrode en plaque ou de l'électrode en plaque arquée forme un arc circulaire qui élimine l'effet d'intensification du champ électrique périphérique.

7. Dispositif de protection contre la foudre selon les revendications 1, 2, 3, 4, 5 ou 6,
dans lequel une couche diélectrique isolante supplémentaire peut être ajoutée entre l'électrode A (31, 35, 38, 37, 30, 39) et l'électrode B (32, 36, 37, 38, 39, 30) de l'unité de décharge par forte ionisation (3) et une telle couche diélectrique améliore en outre la tension d'interruption d'espace.

8. Dispositif de protection contre la foudre selon la revendication 7,
dans lequel l'ensemble parafoudre contient une base en forme de couvercle arquée.

9. Dispositif de protection contre la foudre selon les revendications 1, 2, 3, 4, 5, 6 ou 8,
dans lequel les tiges d'ensemble sont une tige solide métallique ou un tube creux métallique doté de pointes.

10. Dispositif de protection contre la foudre selon la revendication 8,
dans lequel la base est un couvercle métallique arqué creux, l'électrode de décharge décrite de l'unité de décharge par forte ionisation (3) est installée dans le capot et la paroi interne du socle est un pôle de l'électrode de décharge de l'unité de décharge par forte ionisation (3) ; la base est fixée sur l'autre siège d'électrode des électrodes de décharge de l'unité de décharge par forte ionisation (3) à travers un support isolant ; l'électrode de décharge est fixée sur la tour de protection contre la foudre dans une structure de siège ; la partie inférieure de la base est pourvue d'une entrée, et le courant ascendant atmosphérique entre dans la base le long de l'entrée, circulant à travers les électrodes de décharge et étant répandu dans l'espace à travers la sortie de chacune des tiges de tube de l'ensemble.
